# FASCICULE DE BREVET EUROPEEN

(11) **EP 3 475 952 B1**
(45) Date de publication et mention de la délivrance du brevet: **10.03.2021**
(21) Numéro de dépôt: 17730514.1
(22) Date de dépôt: 21.06.2017
(51) Int. Cl.: G21C 17/003, G21C 17/08

(54) **PROCÉDÉ ET DISPOSITIF D'INSPECTION D'UNE PIÈCE DE RÉACTEUR NUCLÉAIRE**
VERFAHREN UND VORRICHTUNG ZUR INSPEKTION EINES KERNREAKTORTEILS
METHOD AND DEVICE FOR INSPECTING A NUCLEAR REACTOR PART

(30) Priorité: 22.06.2016 FR 1655820
(43) Date de publication de la demande: 01.05.2019
(73) Titulaire: FRAMATOME, 92400 Courbevoie (FR)
(72) Inventeur: CAULIER, Yannick, 04100 Manosque (FR)
(74) Mandataire: Lavoix
(86) Numéro de dépôt international: PCT/EP2017/065209
(87) Numéro de publication internationale: WO 2017/220641

(56) Documents cités:
- JP-A- H10 221 256
- US-A- 5 608 529
- US-A- 5 787 137

## Description

L'invention concerne en général l'inspection des pièces d'un réacteur nucléaire.

Au cours de certaines opérations de maintenance du réacteur nucléaire, il est demandé d'inspecter visuellement des zones spécifiques de pièces situées à l'intérieur de la cuve sous pression du réacteur nucléaire.

Ces pièces sont par exemple les pénétrations de fond de cuve, ou des éléments des dispositifs de maintien en position des équipements internes inférieurs.

Il est possible pour ce faire d'utiliser un porteur qui vient mettre en position une caméra face à la pièce à inspecter.

Le dispositif de contrôle commande du porteur permet une mise en place de la caméra avec une erreur sur la position qui est fréquemment de plusieurs centimètres. Pour pouvoir inspecter un endroit précis de la pièce, il est nécessaire de recaler la position de la caméra. On utilise par exemple à cet effet un coin de la pièce, quand celle-ci en possède une. La position de la caméra est ajustée successivement vis-à-vis de chacune des trois surfaces se rejoignant sur le coin.

JP H10 221256 A décrit un dispositif de contrôle apte à acquérir au moins une première image d'au moins une partie de référence, la ou chaque première image étant prise avec un premier grandissement.

Une telle opération est longue. Par ailleurs, elle implique de multiples déplacements du porteur, commandés à distance, ce qui créé un risque de collision avec d'autres équipements internes de la cuve.

Dans ce contexte, l'invention vise à proposer un procédé d'inspection qui ne présente pas les défauts ci-dessus.

A cette fin, l'invention porte selon un premier aspect sur un procédé d'inspection d'une zone d'une pièce d'un réacteur nucléaire, le procédé comprenant les étapes suivantes :
- placement d'un capteur optique en face de la pièce à inspecter à l'aide d'un porteur ;
- acquisition d'au moins une première image d'au moins une partie de référence de la pièce à l'aide du capteur optique, la ou chaque première image étant prise avec un premier grandissement ;
- reconstitution d'un modèle en trois dimensions de ladite partie de référence de la pièce en utilisant la ou chaque première image acquise ;
- calcul de la position d'une zone à inspecter par rapport au capteur optique en utilisant le modèle en trois dimensions ;
- acquisition d'au moins une seconde image de la zone à inspecter à l'aide du capteur optique, la ou chaque seconde image de la zone à inspecter étant prise avec un second grandissement plus élevé que le premier grandissement.

Ainsi, le même capteur optique est utilisé à la fois pour recaler la position du capteur vis-à-vis de la pièce et de la zone à inspecter, et pour réaliser l'inspection de la zone.

Le recalage est effectué uniquement par calcul, et ne nécessite pas de multiples déplacements du porteur.

Le procédé d'inspection est donc accéléré, et les risques d'interférence avec d'autres équipements du réacteur sont diminués.

Le procédé peut en outre présenter une ou plusieurs des caractéristiques ci-dessous, considérées individuellement ou selon toutes les combinaisons techniquement possibles :
- le capteur optique comprend une caméra, la ou chaque première image et la ou chaque seconde image étant acquise à l'aide de la caméra ;
- la caméra comprend un objectif à focale variable et un moteur de modification de la focale de l'objectif, utilisé pour modifier le grandissement entre l'étape d'acquisition d'au moins une première image et l'étape d'acquisition d'au moins seconde première image ;
- le capteur optique comprend un éclairage, ladite partie de référence de la pièce étant éclairée par une lumière structurée pendant l'étape d'acquisition d'au moins une première image ;
- le procédé comprend une étape de reconstitution d'un modèle en trois dimensions de ladite zone à inspecter en utilisant la ou chaque seconde images acquise, de préférence par la méthode du flou optique ; et
- le réacteur nucléaire comprend une cuve, des équipements internes et une pluralité d'assemblages de combustible nucléaire, les équipements internes et les assemblages de combustible nucléaire étant disposés dans la cuve pendant une phase de fonctionnement normal du réacteur nucléaire, le procédé étant mise en oeuvre pendant une phase d'arrêt du réacteur nucléaire, la pièce étant située à l'intérieur de la cuve et étant par exemple une pénétration de fond de cuve ou un élément d'un dispositif de maintien des équipements internes circonférentiellement en position autour d'un axe central de la cuve.

Selon un second aspect, l'invention porte sur un dispositif d'inspection d'une zone d'une pièce d'un réacteur nucléaire, le dispositif comprenant un capteur optique et un porteur configuré pour placer le capteur optique en face de la pièce à inspecter, le capteur optique étant configuré pour :
- acquérir au moins une première image d'au moins une partie de référence de la pièce, la ou chaque première image étant prise avec un premier grandissement ;
- reconstituer un modèle en trois dimensions de ladite partie de référence de la pièce en utilisant la ou chaque première image acquise ;
- calculer la position d'une zone à inspecter par rapport au capteur optique en utilisant le modèle en trois dimensions ;
- acquérir au moins une seconde image de la zone à inspecter, la ou chaque seconde image de la zone à inspecter étant prise avec un second grandissement plus élevé que le premier grandissement.

Le dispositif est spécialement adapté pour la mise en oeuvre du procédé d'inspection ayant les caractéristiques décrites plus haut. Par ailleurs, le procédé d'inspection est également spécialement adapté pour être mis en œuvre par le dispositif d'inspection de l'invention.

Le dispositif peut en outre représenter une ou plusieurs des caractéristiques ci-dessous, considérées individuellement ou selon toutes les combinaisons techniquement possibles :
- le capteur optique comprend une unique caméra configurée pour acquérir la ou chaque première image et la ou chaque seconde image ;
- la caméra comprend un objectif à focale variable et un moteur de modification de la focale de l'objectif ;
- le capteur optique comprend un éclairage configuré pour éclairer ladite partie de référence de la pièce avec une lumière structurée pendant l'étape d'acquisition d'au moins une première image ; et
- le capteur optique comprend un module de reconstitution d'un modèle en trois dimensions de ladite zone à inspecter en utilisant la ou chaque seconde images acquise, de préférence par la méthode du flou optique.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation simplifiée, en coupe axiale, de la cuve d'un réacteur nucléaire ;
- la figure 2 est une vue similaire à celle de la figure 1, dans laquelle le couvercle de cuve et les équipements internes ont été démontés, et le dispositif d'inspection de l'invention a été mis en place ; et
- la figure 3 est un diagramme d'étapes du procédé d'inspection de l'invention.

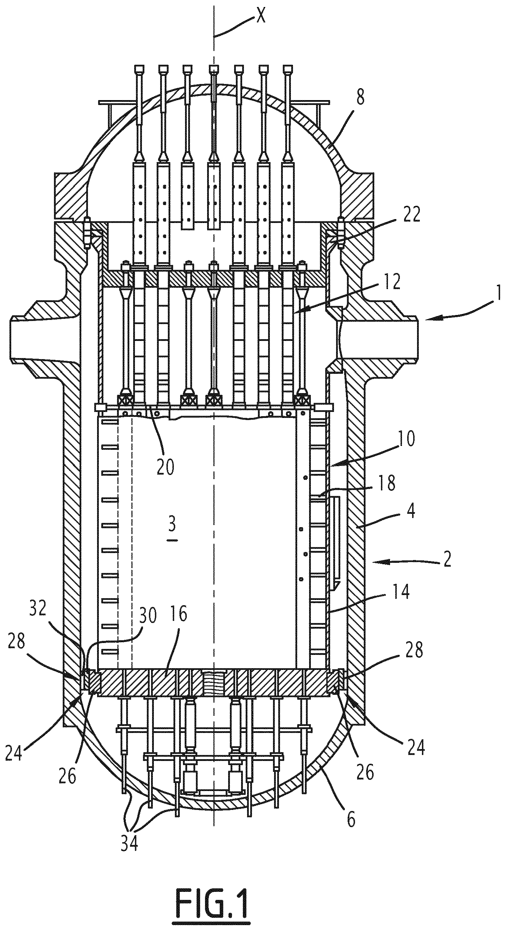

Le procédé et le dispositif de l'invention sont destinés à l'inspection d'une zone d'une pièce d'un réacteur nucléaire. Ce réacteur nucléaire est par exemple un réacteur à eau sous pression, du palier 900 MW, comme représenté sur la figure 1.

Le procédé et le dispositif de l'invention sont également adaptés à tout autre type de réacteur, par exemple BWR, et à tous les paliers et les types de réacteur PWR.

Le réacteur 1 comprend une cuve 2, dans lequel est disposé un cœur 3. Le cœur 3 comporte une pluralité d'assemblages de combustible nucléaire, de forme générale prismatique. La cuve présente un axe central X, sensiblement vertical. La cuve comprend une virole 4 sensiblement cylindrique, un fond inférieur hémisphérique 6, fermant une extrémité inférieure de la virole 4, et un couvercle amovible 8, fermant une extrémité supérieure de la virole 4.

Le réacteur nucléaire 1 comporte encore des équipements internes inférieurs 10 (EII) et des équipements internes supérieurs 12, disposés à l'intérieur de la cuve 2. Les équipements internes inférieurs 10 comportent une enveloppe de cœur 14 de forme générale cylindrique et une plaque de support de cœur 16, solidaire d'une extrémité inférieure de l'enveloppe de cœur 14. L'enveloppe de cœur 14 est dans une disposition coaxiale par rapport à la cuve. Les assemblages de combustible sont disposés à l'intérieur de l'enveloppe de cœur, et reposent sur la plaque de support de cœur 16. L'enveloppe de cœur 14 renferme un cloisonnement 18, s'étendant à la périphérie du cœur 3 et destiné à maintenir les assemblages de combustible nucléaire en position.

Les équipements internes supérieurs 12 comprennent une plaque supérieure de cœur 20, qui repose sur la partie supérieure des assemblages du cœur 3 par l'intermédiaire de ressorts. Les équipements internes inférieurs et supérieurs 10, 12 sont suspendus à l'intérieur de la cuve 2 par une partie supérieure 22 qui est fixée sur un bord supérieur de la virole 4, légèrement en dessous du plan de raccordement du couvercle 8 sur la virole 4.

Dans l'exemple représenté, quatre dispositifs 24 de guidage sont répartis autour de la plaque de support de cœur 16, de manière à maintenir les équipements internes inférieurs 10 en position circonférentiellement autour de l'axe X, et radialement par rapport à l'axe X. Toutefois, les dispositifs de guidage 24 autorisent des déplacements axiaux des équipements internes inférieurs 10 relativement à la cuve, par exemple sous l'effet des dilatations différentielles.

Chaque dispositif de guidage 24 comporte, dans l'exemple représenté, une clavette 26, fixée sur un bord périphérique externe de la plaque de support de cœur 16, et une partie femelle 28 rigidement fixée sur une surface intérieure de la virole 4 de la vue, en vis-à-vis de la clavette 26.

Comme illustré sur la figure 1, la partie femelle 28 comporte typiquement une glissière 30 et un support massif 32, appelé support en M, rigidement fixé à la virole 4 de la cuve. La glissière 30 présente, perpendiculairement à l'axe X, une section en U ouverte radialement vers l'intérieur de la cuve. Circonférentiellement, l'écartement entre les faces internes des deux branches du U est légèrement supérieur à l'écartement entre les deux faces latérales 34 de la clavette.

Comme visible sur la figure 1, le réacteur nucléaire comporte encore des pénétrations de fond de cuve 34 traversant le fond inférieur 6. Les pénétrations de fond de cuve (PFC) sont destinées par exemple à insérer dans le cœur du réacteur des sondes de mesure neutronique mobiles.

Le cœur 3 et les équipements internes 10,12 sont disposés dans la cuve pendant une phase de fonctionnement normal du réacteur nucléaire. On entend ici par phase de fonctionnement normale les phases où le réacteur nucléaire produit de la vapeur, la cuve étant sous pression.

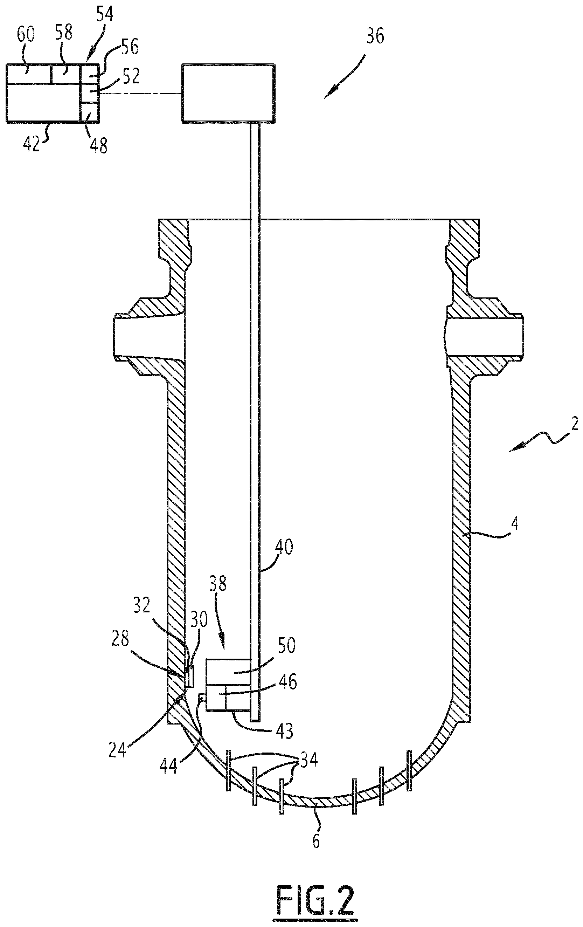

Le procédé et le dispositif d'inspection de l'invention sont destinés à être mis en œuvre pendant une phase d'arrêt du réacteur nucléaire. L'inspection intervient après ouverture de la cuve 2 et évacuation du cœur 3, ainsi que des équipements internes inférieur et supérieur 10, 12, hors de la cuve, comme illustré sur la figure 2.

Le procédé et le dispositif de l'invention sont bien adaptés pour l'inspection des pénétrations de fond de cuve 34, et pour l'inspection de différents éléments des dispositifs de guidage 24, notamment la partie femelle 28, et plus précisément la glissière 30 et le support en M 32.

Toutefois, le procédé et le dispositif de l'invention peuvent également être utilisés pour l'inspection d'autres éléments, situés à l'intérieur de la cuve 1 ou à l'extérieur de la cuve 1.

Le dispositif d'inspection 36 comporte, comme visible sur la figure 2, un capteur optique 38 et un porteur 40 configuré pour placer le capteur optique 38 en face de la pièce à inspecter.

Le porteur est de tout type adapté. Le porteur 40 est par exemple un mat, ou un bras robotisé. Typiquement, le porteur 40 est téléopéré à partir d'un poste de conduite 42 situé à distance de la cuve.

Le capteur optique 38 est configuré pour :
- acquérir au moins une première image d'au moins une partie de référence de la pièce à inspecter ;
- reconstituer un modèle en trois dimensions de ladite partie de référence en utilisant la ou chaque première image acquise ;
- calculer la position de la zone à inspecter par rapport au capteur optique 38 en utilisant le modèle en trois dimensions ;
- acquérir au moins une seconde image de la zone à inspecter.

Pour ce faire, le capteur optique 38 comprend une unique caméra 43, configurée pour acquérir la ou chaque première image et la ou chaque seconde image.

La ou chaque première image est prise avec un premier grandissement, la ou chaque seconde image étant prise avec un second grandissement plus élevé que le premier grandissement.

En d'autres termes, la première image destinée à permettre le recalage du capteur optique 38 par rapport à la zone à inspecter est prise avec un champ relativement plus grand, et éventuellement dans une position du dispositif différente de celle adoptée pour acquérir la seconde image. Par exemple chaque image acquise couvre une surface de la pièce comprise entre 20 X 20 mm² et 1000 X 1000 mm², de préférence comprise entre 100 X 100 mm² et 500 X 500 mm², et valant par exemple 300 X 300 mm² environ.

La ou les secondes images, prévues pour la détection d'anomalies dans la zone à inspecter, sont acquises en champ proche, de manière à permettre une détection fine. Chaque image acquise comme une surface de la zone à inspecter est comprise entre 1 X 1 mm² et 10 X 10 mm², valant par exemple 5 X 5 mm².

De manière à réaliser la prise à la fois des première et seconde images avec la même caméra, cette caméra 43 comprend de manière avantageuse un objectif 44 à focale variable et un moteur 46 de modification de la focale de l'objectif 44. Le moteur 46 est configuré pour permettre de modifier le grandissement pour les prises de vue, et également pour réaliser la mise au point.

De manière avantageuse, le capteur optique 38 comprend une commande à distance 48 du moteur 46. Cette commande à distance 48 est configurée pour permettre d'ajuster la focale de l'objectif 44, par exemple à partir du poste de commande 42.

Le capteur optique 38 comprend avantageusement un éclairage 50 configuré pour éclairer la partie de référence avec une lumière structurée pendant l'acquisition de la ou chaque première image.

L'éclairage 50 est ainsi agencé pour projeter un motif lumineux sur la partie de référence de la pièce, ce motif lumineux étant de tout type adapté. Il comporte par exemple des lignes parallèles entre elle (sinusoïdales ou rectangulaires, de différentes périodes et phases) et/ou un damier et/ou un mouchetis.

Avantageusement, le capteur optique 38 comporte un module 52 de pilotage à distance de l'éclairage 50, par exemple à partir du poste de commande 42.

Le capteur optique 38 comprend typiquement une unité de traitement d'informations 54 formée d'un processeur et d'une mémoire associée au processeur. Les premières images acquises par la caméra 43 sont transmises à l'unité de traitement d'informations 54 et stockées dans la mémoire.

Le capteur optique 38 comprend un module 56 de reconstitution du modèle en trois dimensions de la partie de référence de la pièce en utilisant la ou chaque première image acquise. Ce module 56 est typiquement un logiciel stocké dans la mémoire et apte à être exécutée par le processeur.

De tels logiciels sont connus, et sont fournis par exemple par les sociétés GOM et Steinbichler Optotechnik.

Le principe est que, quand le motif lumineux est projeté sur une surface tridimensionnelle, ce motif apparaît déformé quand il est observé selon une direction autre que celle de la projection. Ce motif déformé est visible sur la ou les premières images, et est utilisé pour reconstruire la forme géométrique en trois dimensions de la partie de la référence.

Le capteur optique 38 comprend encore un autre module 58 programmé pour effectuer le calcul de la position de la zone à inspecter par rapport au capteur optique. Ce module 58 est typiquement un logiciel stocké dans la mémoire de l'unité 54 et susceptible d'être exécuté par le processeur.

Le module 58 comporte en mémoire un modèle numérique théorique en trois dimensions de la pièce, couvrant la partie de référence de la pièce et la zone à caractériser.

Le module 58 est programmé pour comparer le modèle en trois dimensions reconstitué par le modèle 56 et le modèle théorique en trois dimensions pour la partie de la référence, et en déduire par calcul la position du capteur optique 38 par rapport à la partie de référence.

Le module 58 est également programmé pour calculer la position et l'orientation de la zone à inspecter par rapport au capteur optique, en utilisant la position du capteur optique 38 par rapport à la partie de référence préalablement calculée, et la position de la zone à inspecter par rapport à la partie de référence fournie par le modèle en trois dimensions théorique.

Par ailleurs, le capteur optique 38 comporte un module 60 de reconstitution du modèle en trois dimensions de la zone à inspecter en utilisant les secondes images acquises. Ce module 60, est, typiquement, un logiciel, stocké dans la mémoire de l'unité 54 et susceptible d'être exécuté par le processeur.

La ou les secondes images acquises sont transmises à l'unité de traitement d'informations 54 et stockées dans la mémoire.

De préférence, le capteur optique 38 est configuré pour reconstruire un modèle en trois dimensions de la zone inspectée en utilisant la technique du flou optique.

La technique du flou optique est connue.

Ainsi, le capteur optique 38 comprend des modules de calcul 56 et/ou 58 et/ou 60, configurés pour mettre en œuvre respectivement la reconstitution du modèle en trois dimensions de la partie de référence de la pièce en utilisant la ou chaque première image acquise, le calcul de la position de la zone à inspecter par rapport au capteur optique en utilisant le modèle en trois dimensions, et la reconstitution d'un modèle en trois dimensions de ladite zone à inspecter en utilisant la ou chaque seconde image acquise.

Selon une première variante, la méthode de reconstruction tridimensionnelle appelée DFF (Depth From Focus en anglais) est appliquée. Le capteur optique 38 est configuré pour présenter un axe de prise d'image constant pendant l'acquisition des secondes images. Il est configuré pour acquérir plusieurs secondes images, en décalant à chaque fois le plan de netteté maximale le long de l'axe de prise de vue entre les images, sans se déplacer. Le module 60 est programmé pour combiner ensuite les régions nettes des différentes images capturées et reconstruire plan par plan le relief tridimensionnel de la zone à inspecter.

Selon une autre variante, la méthode de reconstruction tridimensionnelle DFD (Depth From Defocus), est appliquée. Au moins une seconde image est analysée. Le relief de la zone inspectée est reconstruit par analyse du niveau de flou optique dans la ou chaque seconde image. Sur la ou chaque seconde image, plus une zone présente un niveau de flou élevé, plus elle est décalée en profondeur par rapport à la zone de netteté. En connaissant les paramètres optiques du capteur optique 38, il est possible de déterminer la profondeur du point de la zone à inspecter associée à chaque pixel de la seconde image.

Le niveau de flou optique sur une image est mesuré par exemple en mesurant le contraste sur l'image. Un contraste faible indique une région floue de l'image tandis qu'un contraste élevé indique une région nette de l'image.

Avantageusement, un motif lumineux texturé est projeté sur la zone à inspecter, de manière à augmenter le contraste et améliorer la précision de l'analyse du flou optique. Ce motif lumineux, comme précédemment, comprend par exemple des lignes parallèles, des franges ou un damier.

Selon une autre variante, le modèle en trois dimensions de la zone à inspecter est reconstruit en utilisant la méthode décrite dans la demande publiée sous le numéro FR 2 995 438.

En variante, les modules 56, 58 et 60 sont réalisés sous forme de composants logiques programmables tels que des FPGA (de l'anglais Field Programmable Gâte Area), ou encore sous forme de circuits intégrés dédiés, tels que des ASIC (de l'anglais Application-Specific Integrated Circuit).

Il est à noter que le porteur 40 et le capteur optique 38 sont adaptés pour être utilisés sous eau.

Le procédé d'inspection de l'invention va maintenant être détaillé.

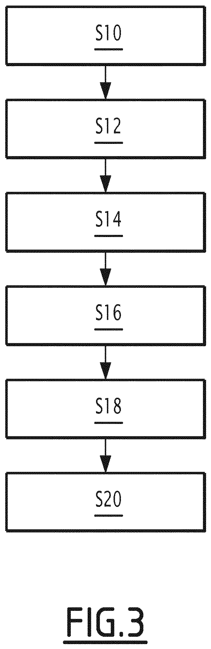

Comme visible sur la figure 3, ce procédé comprend au moins les étapes suivantes :
- S10 : placement d'un capteur optique 38 en face de la pièce à inspecter à l'aide d'un porteur 40 ;
- S12: acquisition d'au moins une première image d'au moins une partie de référence de la pièce à l'aide du capteur optique 38, la première image étant prise avec un premier grandissement ;
- S14 : reconstitution d'un modèle en trois dimensions de ladite partie de référence de la pièce en utilisant la ou chaque première image acquise ;
- S16 : calcul de la position de la zone à inspecter par rapport au capteur optique 38 en utilisant le modèle en trois dimensions ;
- S18 : acquisition d'au moins une seconde image de la zone à inspecter à l'aide du capteur optique 38, la seconde image de la zone à inspecter étant prise avec un second grandissement plus élevé que le premier grandissement, après éventuellement un déplacement du capteur optique 38.

Le porteur 40 est typiquement du type décrit plus haut. Il permet de disposer le capteur optique 38 avec une erreur sur la position de plusieurs centimètres par rapport à la pièce à inspecter. De préférence, le capteur optique 38 est positionné en face d'une partie saillante de la pièce, par exemple une arête ou un coin.

Le capteur optique 38 est typiquement du type décrit ci-dessus.

A l'étape S12, le grandissement à utiliser pour l'acquisition de la ou chaque première image est contrôlé à distance, à partir du poste de conduite 42. Le premier grandissement est fonction de la taille de la partie de référence. La partie de référence de la pièce est typiquement éclairée par une lumière structurée pendant l'acquisition de la ou chaque première image, comme décrit plus haut. La lumière structurée comporte des motifs tels que des lignes parallèles, un damier, des franges etc.

Les motifs sont choisis en fonction de la forme de la partie de référence de la pièce à éclairer.

La ou les premières images sont acquises en champ moyen, la ou chaque première image couvrant une surface de la partie de référence comprise entre 20 x 20 mm² et 1000 x 1000 mm², de préférence comprise entre 100 x 100 mm² et 500 x 500 mm², et valant environ 300 x 300 mm².

Typiquement, l'acquisition de la ou chaque première image est déclenchée à partir du poste de commande 42.

La ou les premières images sont transmises jusqu'à l'unité de traitement d'informations 54 et stockées dans la mémoire de cette unité.

Le modèle en trois dimensions de la partie de référence de la pièce est reconstitué par calcul. Comme indiqué précédemment, le motif lumineux projeté sur la partie de référence apparaît déformé quand on l'observe selon une direction autre que celle de la projection. Ce motif déformé est visible sur la ou chaque première image. Cette ou ces images sont utilisées pour reconstruire la forme géométrique de la partie de référence de la pièce.

En variante, d'autres techniques de reconstitution tridimensionnelles sont utilisées, comme par exemple une technique basée sur le calcul du temps de vol de la lumière (TOF : Time Of Flight), ou une technique de triangulation utilisant une ligne lumineuse projetée et scannée sur la surface à reconstruire.

Pour calculer la position de la zone à inspecter par rapport au capteur optique 38, on utilise un modèle en trois dimensions théorique de la pièce, couvrant au moins la partie de référence et la zone à inspecter.

La position du capteur optique par rapport à la partie de référence est d'abord évaluée en utilisant le modèle en trois dimensions reconstitué précédemment et le modèle en trois dimensions théorique de la pièce. Puis, on calcule la position de la zone à inspecter par rapport au capteur optique, en utilisant la position de la partie de référence par rapport au capteur optique préalablement calculé et la position de la zone à inspecter par rapport à la partie de référence donnée pour le modèle en trois dimensions théorique.

Avant de démarrer l'étape S18 d'acquisition de la ou des secondes images, le grandissement des images acquises par le capteur optique est modifié, à partir du poste de commande 42. Plus précisément, la focale de l'objectif 44 est modifiée en actionnant le moteur 46, à partir du poste de commande 42, de telle sorte que la ou chaque seconde image soit prise avec le second grandissement. Le second grandissement est fonction de la taille de la zone à inspecter.

Au cours de l'étape d'acquisition S18, une ou plusieurs secondes images sont acquises, en fonction du type d'exploitation des images mises en œuvre. Ces images sont transmises à l'unité de traitement d'information 54 et stockées dans la mémoire de cette unité.

Avantageusement, le procédé comporte une étape S20 de reconstruction tridimensionnelle de la zone à inspecter en utilisant la ou les secondes images acquises.

Cette méthode de reconstructions tridimensionnelle utilise typiquement la méthode du flou optique. Une telle méthode permet de caractériser des anomalies surfaciques de taille inférieure à un dixième de millimètre en champ proche. On entend par champ proche le fait que chaque seconde image acquise couvre une surface de la zone à inspecter comprise entre 1 X 1 mm² et 10 X 10 mm².

Le modèle en trois dimensions de la zone à inspecter est reconstitué par calcul, en utilisant la ou chaque seconde image. La reconstitution est effectuée selon la méthode de reconstruction tridimensionnelle appelée DFF (Depth From Focus en anglais), ou selon la méthode de reconstruction tridimensionnelle appelée DFD (Depth From Defocus en anglais), ou encore selon la méthode de reconstruction tridimensionnelle publiée sous le numéro FR 2 995 438.

L'invention en variante est mise en œuvre avec une caméra pour l'acquisition de la ou des premières images, et une autre caméra, différente de la première, pour l'acquisition de la ou chaque seconde image. Avantageusement, chaque caméra a son propre dispositif d'éclairage. En variante, le capteur optique a deux caméras et un dispositif d'éclairage unique.

## Revendications

1. Procédé d'inspection d'une zone d'une pièce d'un réacteur nucléaire, le procédé comprenant les étapes suivantes :
- placement d'un capteur optique (38) en face de la pièce à inspecter à l'aide d'un porteur (40);
- acquisition d'au moins une première image d'au moins une partie de référence de la pièce à l'aide du capteur optique (38), la ou chaque première image étant prise avec un premier grandissement ;
- acquisition d'au moins une seconde image d'une zone à inspecter à l'aide du capteur optique (38), la ou chaque seconde image de la zone à inspecter étant prise avec un second grandissement plus élevé que le premier grandissement ;
**caractérisé en ce que** le procédé comprend en outre les étapes suivantes :
- reconstitution d'un modèle en trois dimensions de ladite partie de référence de la pièce en utilisant la ou chaque première image acquise ;
- calcul de la position de la zone à inspecter par rapport au capteur optique (38) en utilisant le modèle en trois dimensions.

2. Procédé selon la revendication 1, **caractérisé en ce que** le capteur optique (38) comprend une caméra (43), la ou chaque première image et la ou chaque seconde image étant acquise à l'aide de la caméra (43).

3. Procédé selon la revendication 2, **caractérisé en ce que** la caméra (43) comprend un objectif à focale variable (44) et un moteur (46) de modification de la focale de l'objectif (44), utilisé pour modifier le grandissement entre l'étape d'acquisition d'au moins une première image et l'étape d'acquisition d'au moins seconde première image.

4. Procédé selon la revendication 2 ou 3, **caractérisé en ce que** le capteur optique (38) comprend un éclairage (50), ladite partie de référence de la pièce étant éclairée par une lumière structurée pendant l'étape d'acquisition d'au moins une première image.

5. Procédé selon l'une quelconque des revendications précédentes, **caractérisé en ce que** le procédé comprend une étape de reconstitution d'un modèle en trois dimensions de ladite zone à inspecter en utilisant la ou chaque seconde images acquise, de préférence par la méthode du flou optique.

6. Procédé selon l'une quelconque des revendications précédentes, **caractérisé en ce que** le réacteur nucléaire (1) comprend une cuve (2), des équipements internes (10, 12) et une pluralité d'assemblages de combustible nucléaire, les équipements internes (10, 12) et les assemblages de combustible nucléaire étant disposés dans la cuve (2) pendant une phase de fonctionnement normal du réacteur nucléaire (1), le procédé étant mise en œuvre pendant une phase d'arrêt du réacteur nucléaire (1), la pièce étant située à l'intérieur de la cuve (2) et étant par exemple une pénétration (34) de fond de cuve ou un élément d'un dispositif (24) de maintien des équipements internes (10, 12) circonférentiellement en position autour d'un axe central de la cuve (3).

7. Dispositif d'inspection d'une zone d'une pièce d'un réacteur nucléaire (1), le dispositif (36) comprenant un capteur optique (38) et un porteur (40) configuré pour placer le capteur optique (38) en face de la pièce à inspecter, le capteur optique (38) étant configuré pour :
- acquérir au moins une première image d'au moins une partie de référence de la pièce, la ou chaque première image étant prise avec un premier grandissement ;
- acquérir au moins une seconde image d'une zone à inspecter, la ou chaque seconde image de la zone à inspecter étant prise avec un second grandissement plus élevé que le premier grandissement ;
**caractérisé en ce que** le capteur optique (38) est également configuré pour :
- reconstituer un modèle en trois dimensions de ladite partie de référence de la pièce en utilisant la ou chaque première image acquise ;
- calculer la position de la zone à inspecter par rapport au capteur optique (38) en utilisant le modèle en trois dimensions.

8. Dispositif selon la revendication 7, **caractérisé en ce que** le capteur optique (38) comprend une unique caméra (48) configurée pour acquérir la ou chaque première image et la ou chaque seconde image.

9. Dispositif selon la revendication 8, **caractérisé en ce que** la caméra (43) comprend un objectif (44) à focale variable et un moteur (46) de modification de la focale de l'objectif (44).

10. Dispositif selon la revendication 8 ou 9, **caractérisé en ce que** le capteur optique (38) comprend un éclairage (50) configuré pour éclairer ladite partie de référence de la pièce avec une lumière structurée pendant l'étape d'acquisition d'au moins une première image.

11. Dispositif selon l'une quelconque des revendications 7 à 10, **caractérisé en ce que** le capteur optique (38) comprend un module de reconstitution d'un modèle en trois dimensions de ladite zone à inspecter en utilisant la ou chaque seconde images acquise, de préférence par la méthode du flou optique.

## Patentansprüche

1. Verfahren zur Inspektion eines Bereichs eines Kernreaktorbauteils, wobei das Verfahren die folgenden Schritte aufweist:
- Platzieren eines optischen Sensors (38) gegenüber dem zu inspizierenden Bauteil mittels eines Halters (40),
- Erlangen wenigstens eines ersten Bilds von wenigstens einem Referenzabschnitt des Bauteils mittels des optischen Sensors (38), wobei das oder jedes erste Bild mit einer ersten Vergrößerung gemacht wird,
- Erlangen wenigstens eines zweiten Bilds eines zu inspizierenden Bereichs mittels des optischen Sensors (38), wobei das oder jedes zweite Bild des zu inspizierenden Bereichs mit einer zweiten Vergrößerung gemacht wird, die größer ist als die erste Vergrößerung,
**dadurch gekennzeichnet, dass** das Verfahren ferner die folgenden Schritte aufweist:
- Rekonstruieren eines dreidimensionalen Modells des Referenzabschnitts des Bauteils unter Verwendung des oder jedes erlangten ersten Bildes,
- Berechnen der Position des zu inspizierenden Bereichs bezüglich des optischen Sensors (38) unter Verwendung des dreidimensionalen Modells.

2. Verfahren gemäß Anspruch 1, **dadurch gekennzeichnet, dass** der optische Sensor (38) eine Kamera (43) aufweist, wobei das oder jedes erste Bild und das oder jedes zweite Bild mittels der Kamera (43) erlangt werden.

3. Verfahren gemäß Anspruch 2, **dadurch gekennzeichnet, dass** die Kamera (43) ein Objektiv mit variabler Brennweite (44) und einen Antrieb (46) zur Modifikation der Brennweite des Objektivs (44) aufweist, verwendet zum Modifizieren der Vergrößerung zwischen dem Schritt des Erlangens wenigstens eines ersten Bildes und dem Schritt des Erlangens wenigstens eines zweiten Bildes.

4. Verfahren gemäß Anspruch 2 oder 3, **dadurch gekennzeichnet, dass** der optische Sensor (38) eine Beleuchtung (50) aufweist, wobei der Referenzabschnitt des Bauteils mittels eines strukturierten Lichts beleuchtet wird während des Schritts des Erlangens wenigstens eines ersten Bildes.

5. Verfahren gemäß irgendeinem der vorhergehenden Ansprüche, **dadurch gekennzeichnet, dass** das Verfahren aufweist einen Schritt des Rekonstruierens eines dreidimensionalen Modells des besagten zu inspizierenden Bereichs unter Verwendung des oder jedes erlangten zweiten Bildes, bevorzugt mittels der Methode der optischen Unschärfe.

6. Verfahren gemäß irgendeinem der vorhergehenden Ansprüche, **dadurch gekennzeichnet, dass** der Kernreaktor (1) einen Behälter (2), innere Einrichtungen (10, 12) und eine Mehrzahl von Kernbrennstabanordnungen aufweist, wobei die inneren Einrichtungen (10, 12) und die Kernbrennstabanordnungen in dem Behälter (2) angeordnet sind während einer normalen Funktionsphase des Kernreaktors (1), wobei das Verfahren durchgeführt wird während einer Stopphase des Kernreaktors (1), wobei das Bauteil im Innern des Behälters (2) angeordnet ist und zum Beispiel eine Behälterboden-Penetration (34) oder ein Element einer Vorrichtung (24) zum Halten der inneren Einrichtungen (10, 12) umfänglich in Position um eine Mittelachse des Behälters (3) herum ist.

7. Vorrichtung zur Inspektion eines Bereichs eines Bauteils eines Kernreaktors (1), wobei die Vorrichtung (36) einen optischen Sensor (38) und einen Halter (40) aufweist, der konfiguriert ist zum Platzieren des optischen Sensors (38) gegenüber dem zu inspizierenden Bauteil, wobei der optische Sensor (38) konfiguriert ist zum:
- Erlangen wenigstens eines ersten Bildes von wenigstens einem Referenzabschnitt des Bauteils, wobei das oder jedes erste Bild mit einer ersten Vergrößerung gemacht wird,
- Erlangen wenigstens eines zweiten Bilds eines zu inspizierenden Bereichs, wobei das oder jedes zweite Bild des zu inspizierenden Bereichs mit einer zweiten Vergrößerung gemacht wird, die größer ist als die erste Vergrößerung,
**dadurch gekennzeichnet, dass** der optische Sensor (38) auch konfiguriert ist zum:
- Rekonstruieren eines dreidimensionalen Modells des Referenzabschnitts des Bauteils unter Verwendung des oder jedes erlangten ersten Bildes,
- Berechnen der Position des zu inspizierenden Bereichs bezüglich des optischen Sensors (38) unter Verwendung des dreidimensionalen Modells.

8. Vorrichtung gemäß Anspruch 7, **dadurch gekennzeichnet, dass** der optische Sensor (38) eine einzige Kamera (48) aufweist, die konfiguriert ist zum Erlangen des oder jedes ersten Bilds und des oder jedes zweiten Bilds.

9. Vorrichtung gemäß Anspruch 8, **dadurch gekennzeichnet, dass** die Kamera (43) ein Objektiv (44) mit variabler Brennweite und einen Antrieb (46) zur Modifikation der Brennweite des Objektivs (44) aufweist.

10. Vorrichtung gemäß Anspruch 8 oder 9, **dadurch gekennzeichnet, dass** der optische Sensor (38) eine Beleuchtung (50) aufweist, die konfiguriert ist zum Beleuchten des Referenzabschnitts des Bauteils mit einem strukturierten Licht während des Schritts des Erlangens wenigstens eines ersten Bilds.

11. Verfahren gemäß irgendeinem der Ansprüche 7 bis 10, **dadurch gekennzeichnet, dass** der optische Sensor (38) aufweist ein Modul zur Rekonstruierung eines dreidimensionalen Modells des zu inspizierenden Bereichs unter Verwendung des oder jedes erlangten zweiten Bilds, bevorzugt mittels der Methode der optischen Unschärfe.

## Claims

1. A method for inspecting an area of a nuclear reactor part, the method comprising the following steps:
- placing an optical sensor (38) in front of the part to be inspected using a carrier (40);
- acquiring at least a first image of at least a reference portion of the part using the optical sensor (38), the or each first image being taken with a first magnification;
- acquiring at least a second image of an area to be inspected using the optical sensor (38), the or each second image of the area to be inspected being taken with a second magnification higher than the first magnification;
**characterized in that** the method further comprises the following steps:
- reconstituting a three-dimensional model of said reference portion of the part using the or each first acquired image;
- calculating the position of the area to be inspected relative to the optical sensor (38) using the three-dimensional model.

2. The method according to claim 1, **characterized in that** the optical sensor (38) comprises a camera (43), the or each first image and the or each second image being acquired using the camera (43).

3. The method according to claim 2, **characterized in that** the camera (43) comprises a variable-focus lens (44) and a motor (46) for changing the focus of the lens (44), used to modify the magnification between the step for acquiring at least a first image and the step for acquiring at least a second image.

4. The method according to claim 2 or 3, **characterized in that** the optical sensor (38) comprises a light source (50), said reference portion of the part being illuminated by a structured light during the step for acquiring at least a first image.

5. The method according to any one of the preceding claims, **characterized in that** the method comprises a step for reconstituting a three-dimensional model of said area to be inspected by using the or each second acquired image, preferably by the optical blur method.

6. The method according to any one of the preceding claims, **characterized in that** the nuclear reactor (1) comprises a vessel (2), internal equipments (10, 12) and a plurality of nuclear fuel assemblies, the internal equipments (10, 12) and the nuclear fuel assemblies being placed in the vessel (2) during a normal operating phase of the nuclear reactor (1), the method being carried out during a stopping phase of the nuclear reactor (1), the part being located inside the vessel (2) and for example being a vessel bottom entry (34) or an element of a device (24) for keeping internal equipments (10, 12) circumferentially in position around a central axis of the vessel (2).

7. A device for inspecting an area of a nuclear reactor part (1), the device (36) comprising an optical sensor (38) and a carrier (40) configured to place the optical sensor (38) in front of the part to be inspected, the optical sensor (38) being configured to:
- acquire at least a first image of at least a reference portion of the part, the or each first image being taken with a first magnification;
- acquire at least a second image of an area to be inspected, the or each second image of the area to be inspected being taken with a second magnification higher than the first magnification;
**characterized in that** the optical sensor (38) is also configured to:
- reconstitute a three-dimensional model of said reference portion of the part using the or each first acquired image;
- calculate the position of the area to be inspected relative to the optical sensor (38) using the three-dimensional model.

8. The device according to claim 7, **characterized in that** the optical sensor (38) comprises a single camera (48) configured to acquire the or each first image and the or each second image.

9. The device according to claim 8, **characterized in that** the camera (43) comprises a variable-focus lens (44) and a motor (46) for changing the focus of the lens (44).

10. The device according to claim 8 or 9, **characterized in that** the optical sensor (38) comprises a light source (50) configured to illuminate said reference portion of the part with a structured light during the step for acquiring at least a first image.

11. The device according to any one of claims 7 to 10, **characterized in that** the optical sensor (38) comprises a module for reconstituting a three-dimensional model of said area to be inspected by using the or each second acquired image, preferably by the optical blur method.
